# EUROPEAN PATENT SPECIFICATION

(11) **EP 0 418 866 B1**
(45) Date of publication and mention of the grant of the patent: **09.07.1997**
(21) Application number: 90118037.2
(22) Date of filing: 19.09.1990
(51) Int. Cl.: H04L 1/16, H04L 1/18

(54) **Signal transmission system capable of performing re-transmission control in units of slots**
Zur Ausführung einer Wiederholungskontrolle pro Zeiteinheit fähiges Signalübertragungssystem
Système de transmission de signaux capable d'effectuer des contrôles de retransmission par unité d'intervalle de temps

(30) Priority: 19.09.1989 JP 240500/89
(43) Date of publication of application: 27.03.1991
(73) Proprietor: NIPPON TELEGRAPH AND TELEPHONE CORPORATION, Shinjuku-ku, Tokyo 163-19 (JP); NTT MOBILE COMMUNICATIONS NETWORK INC., Minato-ku, Tokyo (JP)
(72) Inventor: Onoe, Seizo, Isogo-ku, Yokohama-shi (JP); Funakawa, Kimitoshi, Hoya-shi, Tokyo (JP); Umeda, Narumi, Kanazawa-ku, Yokohama-shi (JP); Suzuki, Tamami, Kanazawa-ku, Yokohama-shi (JP)
(74) Representative: Schmidt-Evers, Jürgen, Dipl.-Ing.

(56) References cited:
- EP-A- 0 063 076
- EP-A- 0 213 682

## Description

The present invention essentially relates to a signal transmission system and, more particularly, to a signal transmission system for transferring long messages, such as user packets, in a mobile communication system whose transmission paths have relatively low reliability.

Hitherto, various re-transmission control systems, such as a Go-Back-N (GBN) system and a Selective-Repeat (SR) system, have been proposed and actually employed for the data-link layer protocol such as HDLC (High-Level Data Link Control) or the like.

In the GBN system, a plurality of frames are transmitted simultaneously, and all frames are transmitted again even if any of the frames has failed to reach a receiving station. In the SR system, a plurality of frames are transmitted simultaneously, and only one or more of the frames, which have failed to reach a receiving station, are transmitted again to the station.

In a mobile transmission system having transmission paths in which fading may occur and which are therefore unreliable, the failure rate of transferred words (or control signals), which amounts to only about 10 bytes, may be reduced to about 10⁻² by using, for example, error correcting codes. When data of about 2 kilobytes, is transferred, however, the failure rate of data will be 0.86, if not affected by the failure rate determined for each subsection of the mobile communication system. Obviously, the mobile communication system has but extremely low reliability.

In other words, the mobile communication system is sufficiently reliable as long as re-transmission control is performed on a relatively small amount of data, such as control signals. However, when the re-transmission control is performed on a large amount of data, such as a user packet, the data signals must be transferred many times, and many re-transmission request signals must be transmitted from the receiving station. Consequently, the transmission paths of the system become so "overcrowded" that data can scarcely be transmitted through them.

In order to avoid the overcrowding of the paths, a great amount of data may be divided into small blocks, and these data blocks may be transferred through the paths under the conventional re-transmission control. If this method is used, however, a transmission sequence order number must be added to each data block. Further, the ID number assigned to the mobile station to which the data block is to be transferred must also be added to the data block, particularly when the mobile system includes many mobile stations. When an order number and an ID number are added to each data block, the operating efficiency of the mobile system decreases inevitably.

Furthermore, if the conventional re-transmission control is applied in the mobile communication system, it will be necessary to divide a message into blocks and reconstruct it in accordance with the instruction of upper layers. Obviously, complex data-processing must be performed in order to divide and reconstruct a message.

From EP-A-0 213 682 a signal transmission system for use in a digital communication system is known wherein a message is transferred between a central station and a terminal station. A message to be transmitted is divided into a plurality of time segments and error correcting/detecting coding is applied to each time segment for error correction, wherein segment identification numbers are included in each segment and selective retransmission is used. According to this document, a message identification is attached to each message and a segment identification is attached to each segment. Furthermore, to each segment the corresponding message identification is attached.

It is the object of the present invention to provide a new and improved signal transmission system which can reliably transmit long messages, such a user packets, even if the transmission paths used have relatively low reliability.

This object is achieved by a signal transmission system according to claim 1.

Advantageous embodiments of the present invention are described in dependent claims 2-4.

The present invention is characterized in two respects. First, the signals to be transferred are divided into a plurality of data units, and an error correcting/detecting code is added to each data unit. Second, use is made of a signal including a retransmission sequence order number in unit of messages and a retransmitted data unit signal as a retransmission request signal and a message-transfer signal.

This invention can be more fully understood from the following detailed description when taken in conjunction with the accompanying drawings, in which:
Fig. 1 is a block diagram showing a station used either as a terminal station or a central station in a mobile communication system according to a first embodiment of the present invention;
Fig. 2 is a diagram explaining the outline of a signal structure used in the mobile communication system;
Fig. 3 is a diagram representing the format of a massage transfer signal and that of a re-transmission request signal, both signals being used in the mobile communication system;
Fig. 4 is a flow chart explaining the operation of the mobile communication system;
Fig. 5 is a block diagram illustrating the central station and a terminal station, both incorporated in a communication system according to a second embodiment of the invention, and explaining how data is random-accessed to the central station from the terminal station;
Fig. 6 is a diagram showing the formats of two data pieces which are transferred through two transmission paths, respectively, between the central station and the terminal station, both shown in Fig. 5;
Fig. 7 is a diagram showing the format of data which is re-transmitted under the SR re-transmission control; and
Fig. 8 is a graph representing the throughput of a signal transmission system according to the invention and those of two conventional signal transmission systems.

Reference will now be made in detail to the presently preferred embodiments of the invention as shown in the accompanying drawings, in which like reference characters designate like or corresponding parts throughout the several drawings.

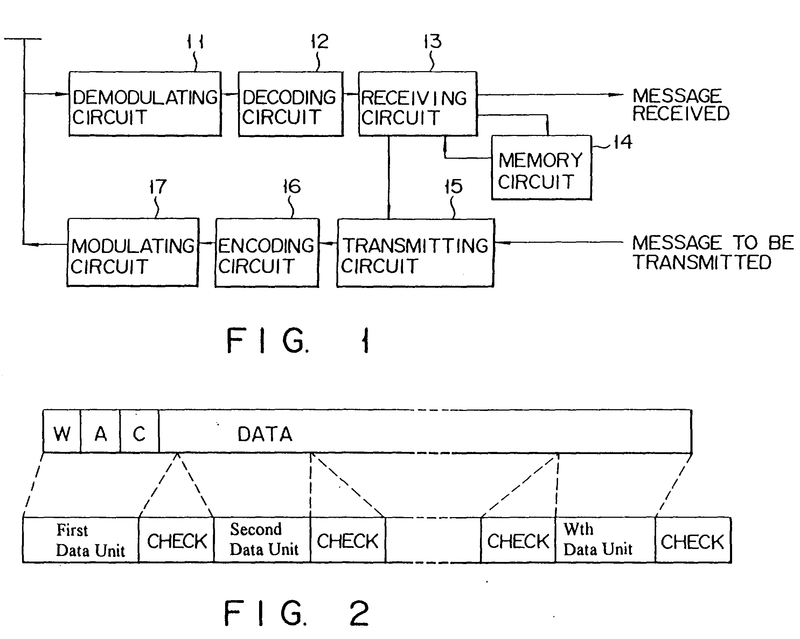

Fig. 1 is a block diagram showing a station used as either as a terminal station or a central station incorporated in a mobile communication system according a first embodiment of the present invention. As is shown in Fig. 1, this station comprises a demodulating circuit 11, a decoding circuit 12, a receiving circuit 13, memory circuit 14, a transmitting circuit 15, a coding circuit 16, and a modulating circuit 17.

Fig. 2 shows the outline of a signal structure used in the mobile communication system. The upper half of this figure shows the message, which is comprised of data W representing the format of the message, an address field A, a control field C, a data field, and the like. The lower half of Fig. 2 explains how the message is divided into data units having a predetermined length and how an error correcting/detecting code is added to each of these data units. As is evident from Fig. 2, the first data unit consists of the data W, the address field A and the control field C. Nevertheless, the data W and the fields A and C can be divided into two or more data units. Further, the message can be bit-interleaved. Still further, the data units can be set apart on the time axis, so that they may be transmitted in the form of bursts.

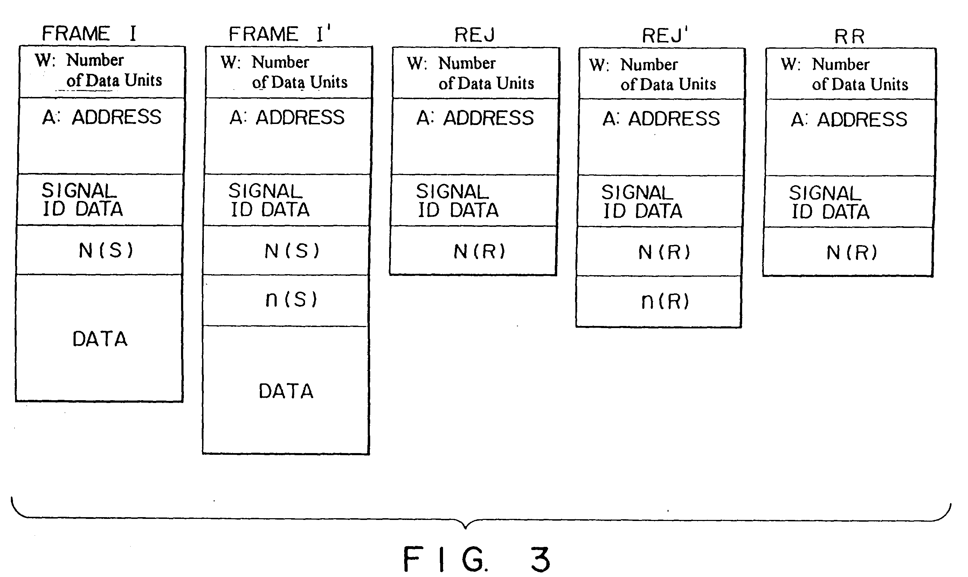

Fig. 3 is a diagram representing the format of a message transfer signal and that of a re-transmission request signal, both signals being used in the mobile communication system. In other words, Fig. 3 is a detailed representation of the upper half of Fig. 2. Shown in Fig. 3 are: a frame I which is the format used to transmit the entire message to be transmitted; a frame I' which is the format used to transmit a data unit, i.e., a part of the message; REJ (an abbreviation of REJect) which is the format used to re-transmit the entire message; REJ' is the format used to re-transmit a data unit, i.e., a part of the message; and RR (Receive Ready) is the format used to acknowledge the receipt of any data.

In each of the formats shown in Fig. 3, data W represents the configuration of the message, that is, the number of data units forming the message, the number of valid bits constituting the last data unit (i.e., the Wth data unit), and the like. As can be understood from Fig. 3, an error correcting/detecting code is added to the first data unit which contains data W, an address field A, etc. Instead, in order to achieve random access control, an error correcting/error detecting code can be added to the data W only. This technique of adding the code to the data W only is advisable when the data W must be decoded in the central station as fast as is possible in order to prohibit the transmission of any other signals or data during the transmission of the data W which represents the number of data units constituting the message.

In the embodiment shown in Figs. 2 and 3, the same error correcting/detecting code is added to any data unit. Nevertheless, an error correcting/detecting code of a greater magniture can be added to the first data unit since this data unit, which contains an address field and a control field, and is more important than any other data unit.

The address field A contains terminal-station ID data for identifying a plurality of terminal stations. Also, it contains ID data for setting a plurality of logic links within each terminal station in order to achieve various tasks such as signaling.

The control field C consists of signal ID data, a transmission sequence order number N(S) of the message, a reception sequence order number N(R) of the message, a transmission sequence order number n(S) of the data unit, and a reception sequence order number n(R) of the data unit. The signal ID data consists of codes which are used to identify the formats I, I', REJ, and REJ'.

In the communication system a part of which is shown in Fig. 1, GBN re-transmission control is carried out in high level data link control (HDLC) procedure, by using the number N(S) and the number N(R). More specifically, to re-transmit data in units of messages, both numbers N(S) and N(R) are reset in the transmitting station and also in the receiving station and then are set to "0." The transmitting station transmits the first message whose transmission sequence order number is "0." Thereafter, the number N(S) is continuously incremented, each time by one, whereby the transmitting station transmits the next messages, one by one. The receiving station receives these messages transmitted from the transmitting station. Every time the receiving station receives a message, it transfers the format RR, representing the number N(R)=N(S)+1, to the transmitting station, thereby acknowledging the receipt of the message. Upon receipt of the format RR, the transmitting station determines that the receiving station has received any message having the reception sequence order number less than the number N(R). Hence, the message whose reception sequence order number is less than the N(R) represented by the format RR can be erased from the transmission buffer incorporated the transmitting station.

Should any frame I fail to reach the receiving station due to the malfunction of the transmission path, the transmission sequence order number N(S) of this frame I is missing in the receiving station. In this case, the receiving station transfers the format REJ representing the number N(S)+1 to the transmitting station. Upon receipt of this format REJ, the station which is transmitting the frame I re-transmits the messages the first of which has the number N(S)+1. In this way, the system a part of which is shown in Fig. 1 performs re-transmission control in units of messages.

Furthermore, in the receiving station it is deter-mined whether or not the data units forming any message have been received, by detecting the error correcting codes (CHECK) which separate the data units as is shown in Fig. 2. If all data units forming the message have been received, it is determined that the message has reached the receiving station. Should the first data unit fail to reach the receiving station, then it is determined that the entire message has not reached the receiving station. On the other hand, if the first data unit has reached, but one or some of the following data units have not reached, the receiving station sets the number N(S) contained in the first data unit to N(R), the number N(S) is set to the number N(R). Then, the receiving station transfers, to the transmitting station, the format REJ' which represents the number n(R), where n = k-1 (k is the serial number of the first of the data units not having reached the receiving station).

Upon receipt of the format REJ', the station which is transmitting the frame I transmits the frame I' containing the data unit corresponding to the format REJ'. This frame I' is comprised of four parts: (1) the number N(S) set in the control field C of the first data unit; (2) the number N(R) of the format REJ', replacing the number n(S) of the first data unit; (3) the number n(R) of the format REJ', replacing the number n(S) of the first data unit; and (4) the re-transmitted slot corresponding to the first of the data units not having reached the receiving station. The data field of the first data unit can contain either dummy data or data identical to the data which has reached the receiving station. The dummy data or the data contained in the data field of the first data unit can be used to correct errors, if any, in the first data unit of the frame I'. In the receiving station, the relationship between the frame I' and the frame I, which has not reached the station in its entirety, is determined by the address and the number N(S), and the data unit re-transmitted in the frame I' is combined with the data unit transmitted in the first frame I, whereby reconstructing the whole message.

With reference to Fig. 1, it will now be explained how a message is transferred from a terminal station to the central station. Once the message is input to the transmitting circuit 15 of the terminal station, the circuit 15 generates a frame I containing a number N(S) by the method described above. The frame I is encoded by the encoding circuit 16, then modulated by the modulating circuit 17, and finally transmitted from the terminal station to the central station.

In the central station, which has the same structure as the terminal station, the demodulating circuit 11 demodulates the frame I, and the decoding circuit 12 decodes the demodulated frame I. The decoded frame I is input to the receiving circuit 13. The circuit 13 analyzes the address of the first data unit of the message, and checks the number N(S) assigned to the address. More precisely, the receiving circuit 13 determines whether or not the number N(S) of the frame I is greater by one than the number of N(S) of the frame I which has been previously input to the circuit 13 at the same address. If NO, the receiving circuit 13 supplies a re-transmission request to the transmission circuit 15. If YES, and if the central station has received all data units forming the message, the circuit 13 outputs the message received, and supplies the transmission circuit 15 with the data representing the number N(R) which will be represented by a format RR. If YES, and if the central station has not received any data unit other than the first, the data units received are stored into the memory circuit 14, and the receiving circuit 13 supplies a re-transmission request to the transmitting circuit 15, so that the data unit identified by a format REJ' may be transmitted again from the terminal station to the central station. When the frame I' is transmitted from the terminal station to the central station, the frame I is read from the memory circuit 14 in accordance with the address and number N(S) of the frame I'. Then, the data unit re-transmitted in the frame I' is combined with the data unit contained in the frame I read out of the memory circuit 14, in accordance with the transmission sequence order number n(S) of the data unit.

If there are data units which the central station has not received yet, the receiving circuit 13 supplies re-transmission requests, one after another, to the transmitting circuit 15, whereby the data units are transmitted again in the frame I' from the terminal station to the central station. When the central station receive all data units of the message are at last, the receiving circuit 13 combines these data units, thus reconstructing the message. The message, thus reconstructed, is supplied from the receiving circuit.

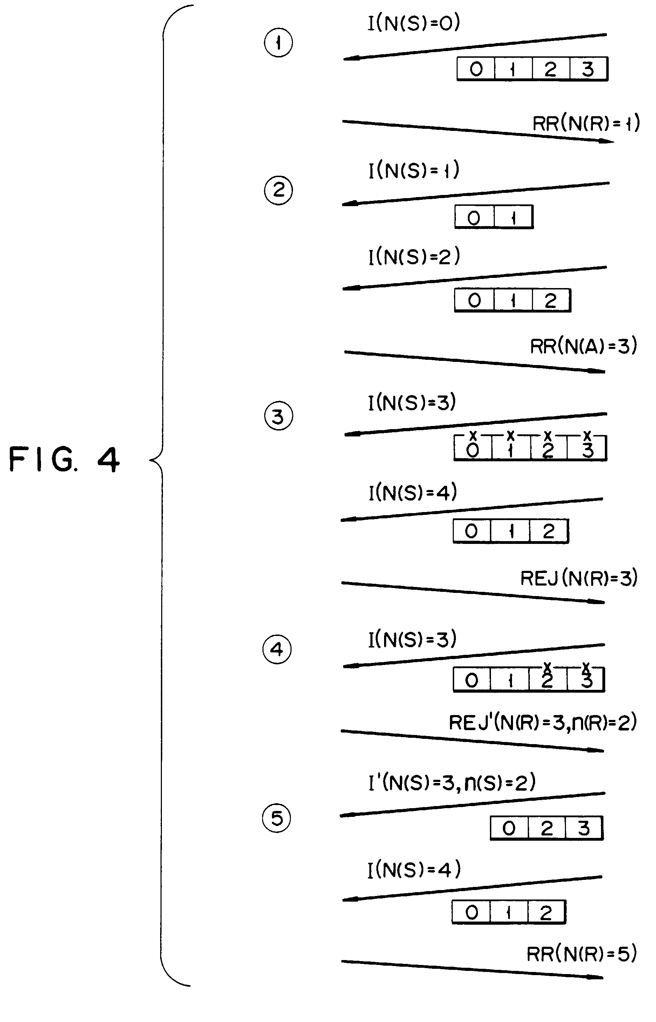

Fig. 4 is a flow chart explaining how communication system, a part of which is shown in Fig. 1, operates to transfer one frame of data from one station to another, for from the right to the left in Fig. 4. In step 1, the transmitting station transfers the frame I (N(S)=0) to the receiving station, and the receiving station transfers the number RR (N(S)=N(S)+1=1) to the transmitting station, upon receipt of the frame I. Then, in step 2, the transmitting station transfers the frame I (N(S)=1) and the frame I (N(S)=2), one after the other, to the receiving station. When the receiving station receives both frames, it transfers the format RR (N(R)=3) to the transmitting station, thereby acknowledging the receipt of both frames representing numbers N(S)=1 and N(S)=2. In the next step, i.e., step 3, the transmitting station transfers two frames I (N(S)=3) and I (N(S)=4). Assuming that the receiving station receives only the latter frame I (N(S)=4), the receiving station transfers the format REJ (N(S)=3) again to the transmitting station, thus the requesting re-transmission of the frame I (N(S)=3). The communication procedure performed thus far is identical to the ordinary HDLC.

In step 4, the transmitting station transfers the frame I (N(S)=3) again. If the second and third data units fail to reach the receiving station, the receiving station transfers the format REJ' representing the numbers N(R)=3 and n(R)=2, thus requesting the re-transmission of the second and third data units. Hence, in step 5, the transmitting station transmits again frames I'(N(R)=3) and I'(n(R)=2) to the receiving station, and then transmits also the frame I(N(S)=4) again. Upon receipt of the three frames I'(N(R)=3), I'(n(R)=2), and I(N(S)=4), the receiving station transfers the format RR representing the number N(R)=5 to the transmitting station. Hence, in the receiving station it is determined that the frames up to the frame I(N(S)=4).

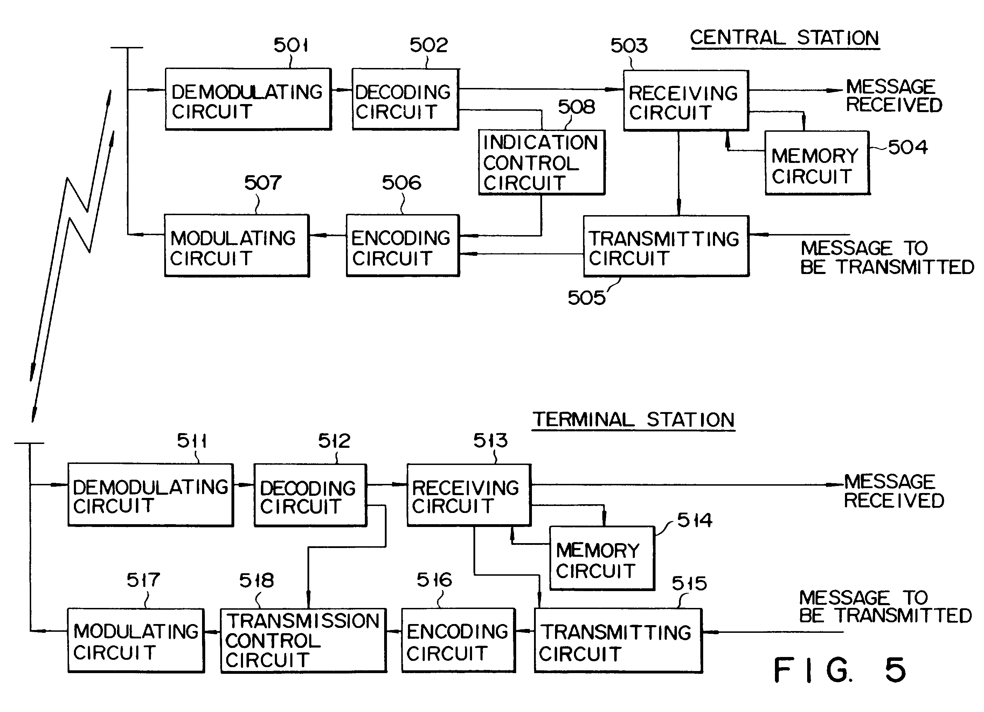

Fig. 5 is a block diagram illustrating the central station and one of the terminal station, all incorporated in a communication system according to a second embodiment of the invention. As is shown in Fig. 5, the central station comprises a demodulating circuit 501, a decoding circuit 502, a receiving circuit 503, memory circuit 504, a transmitting circuit 505, an encoding circuit 506, a modulating circuit 507, and an indication control circuit 508. The terminal station comprises a modulating circuit 511, a decoding circuit 512, a receiving circuit 513, a memory circuit 514, a transmitting circuit 515, an encoding circuit 516, a modulating circuit 517, and a transmission control circuit 518.

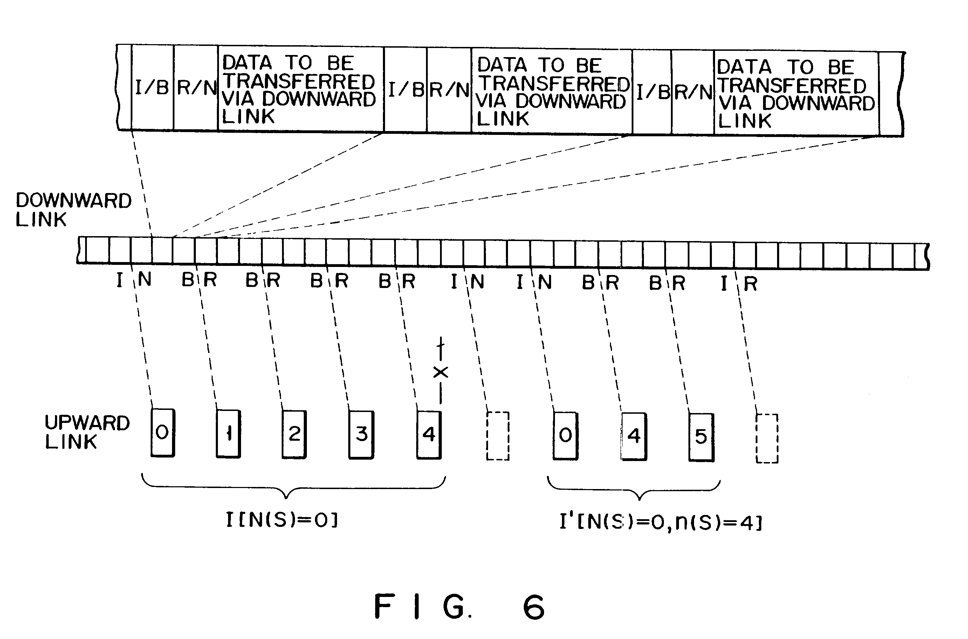

Fig. 6 is a timing chart showing the formats of two data pieces which are transferred through two transmission paths, i.e., the upward link and the downward link, respectively, between the central station and the terminal station, both shown in Fig. 5. In other words, Fig. 6 explains how data is random-accessed to any central station of the communication system according to the second embodiment of the invention.

As can be understood from Fig. 6, the data to be transmitted through the downward link from the central station to the terminal station is divided into a plurality of data units. Each of the data units contains two indication signals I/B and R/N. The signal I/B is transmitted from the central station to the terminal station, informing whether or not the data unit can be transmitted to the terminal station. The I signal indicates that the data unit can be transmitted, whereas the signal B indicates that the data unit cannot be transmitted. The signal R/N is transmitted from the central station to the terminal station, informing wether or not the central station has received any data unit from the terminal station; the signal R indicates that the central station has correctly received the data unit, whereas the signal N shows that the central station has not received the data unit.

The upward link is used to transfer messages from the terminal station to the central station, more precisely, every third data unit of each message, with a pause between every two adjacent data units transferred as is shown in Fig. 6. The I/B signal contained in any data unit being transferred through the upward link, and the signal R/N con-tained in the immediately preceding data unit already transferred via the upward link are identical to those contained in the data unit already transferred via the downward link to the terminal station.

In the terminal station (Fig. 5), the signals I/B and R/N, both demodulated by the demodulating circuit 511 and decoded by the decoding circuit 512, are separated from each other and then input to the transmission control circuit 518. To transmit a message to the central station, the transmitting circuit 515 adds a transmission sequence order number N(S) to the message. The message is then encoded by the encoding circuit 516. The transmission control circuit 518 supplies the data units forming the encoded message, in accordance with the I/B signal supplied from the decoding circuit 512. That is, the circuit 518 supplies a data unit to the modulating circuit 517 if the circuit 518 has received the data unit while receiving the signal I from the decoding circuit 512.

Any data unit output from the demodulating circuit 517 is transmitted to the central station through the upward link. In the central station ( Fig. 5), the data unit is demodulated by the demodulating circuit 501 and then decoded by the decoding circuit 502. The data W representing the number of the data units forming the message is input to the indication control circuit 508. Also, the data showing the condition, in which the central station has received the message, is input to the circuit 508. The indication control circuit 508 outputs a signal R/N to the encoding circuit 506. When the circuit 508 receives the (W-l)th data unit of the message, where W is the number of the data units constituting the message, it outputs a signal B, thus inhibiting any other terminal station from transmitting messages to the central station, so that the message being transmitted through the upward link may be protected against collision with other messages.

In the central station, the receiving circuit 503 checks the number N(S) and the like. Upon receipt of all data units constituting the message, the circuit 503 outputs the message. The circuit 503, the memory circuit 504, and the transmitting circuit 505 operate in the same way as their counterparts shown in Fig. 1.

The receipt of any data unit transmitted through the upward link can be detected and indicated, the terminal station can re-transmit the message in units of frames I', or data units, before receiving a frame REJ', i.e., a re-transmission request, from the central station. Also, the terminal station can stop transmitting the message the moment it is detected that the first frame I has failed to reach the central station. Therefore, unnecessary transmission can be minimized in the case where the message is re-transmitted in units of data units by the GBN method.

With reference to Fig. 6, it will now be explained how the frame I (W=5) is transmitted from the terminal station to the central station. First, it is determined from the I/B signal that the frame I can be transmitted to the central station. Next, the terminal station starts transmitting the frame I(N(S)=0). After the second data unit et seq. have been transmitted, the I/B signal = "B", and the R/N signal = "R," and it is determined that the central station has received the second data unit et seq. Hence, the terminal station transmits the other data units to the central station. Assuming that the fourth data unit fails to reach the central station, the central station transfers a signals I/B which is "I" indicating that the data unit not received is the last one, and a signal R/N which is "N" indicating that the data unit has not been received. Upon receipt of the I/B and R/N signals, the terminal station does not transmit the fifth data unit. When the terminal station receives a signal I/B which is "I" some time later, it is determined that data units can be transmitted to the central station. Hence, the terminal station starts transmitting frames I'(N(S)=0) and I'(n(S)=4), thus re-transmitting two data units whose re-transmission sequence order numbers are "4" and "5."

In this instance, data units are not protected from collision with any other data unit if the terminal station receives a signal I/B which is "B" indicating that any data unit has failed to reach the central station. Rather, transmission of data units from another terminal station is allowed, and the terminal station begins to re-transmit the data units upon receipt of a signal I/B which is "I." In the case where data units transmitted in the form of bursts due to their fading interrelationship fail to reach the central station, another re-transmission technique can be more effective in which the data units are set apart on the time axis. If data units fail to reach the central station at random, the central station transfers signals B and N even if it does not receive the entire message. As a result of this, the terminal station can re-transmit the frames I'(N(S)=0) and I(n(S)=4), while the other terminal stations are prohibited from transmitting data units to the central station.

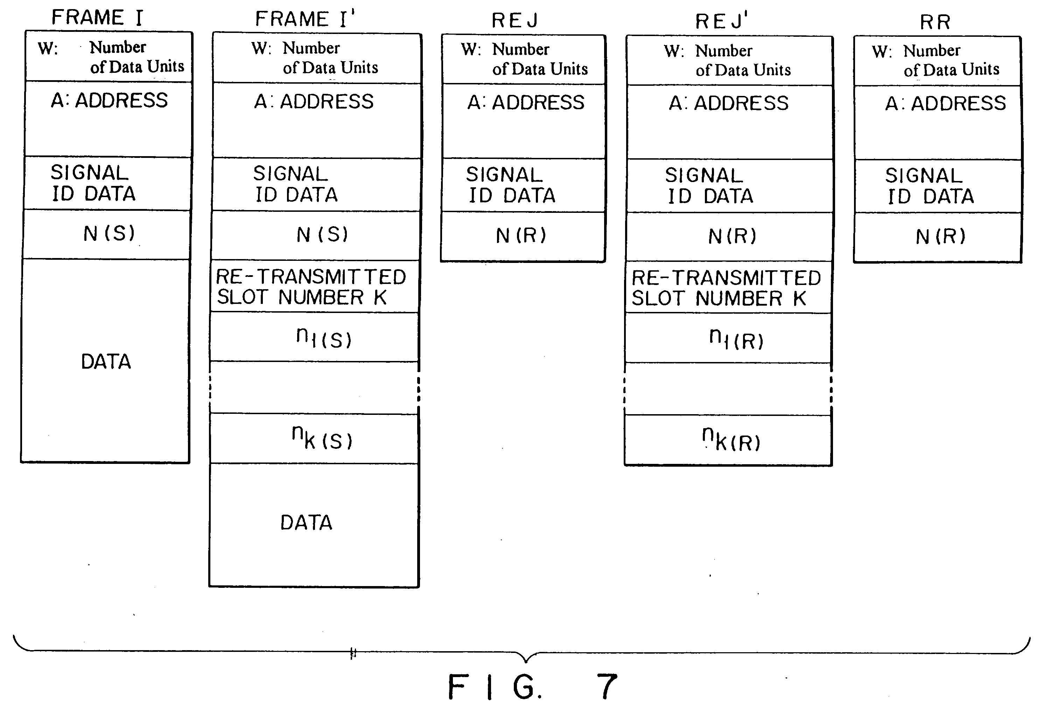

The above description is based on the assumption that the terminal station re-transmits some of the data units forming a message under the GBN re-transmission control. Nevertheless, efficient transmission of messages can also be accomplished if data units are re-transmitted under the RS re-transmission control. Fig. 7 is a diagram showing a format of data to be re-transmitted under the SR control. The format shown in this figure is different from that shown in Fig. 3 in two respects. First, the frame I' contains a re-transmitted data unit number K, and also contains numbers n₂(S) and nₖ(S) instead of numbers n(S) and n(S) for the first data unit. Second, the frame REJ' contains a re-transmitted data unit number K, and also contains numbers nₗ(R) and nₖ(R) instead of numbers n(R) and n(R) for the first data unit. Except for the use of different data format, the SR re-transmission control is the same as the GBN re-transmission control. When the SR control is applied, the number of fields required increases in proportion to the number of data units which must be re-transmitted. When the number of data units exceeds a predetermined value, the re-transmission control can be switched to the GBN control. In other words, in the present invention, the SR control and the GBN control can be applied in combination.

In the case of the GBN re-transmission control, some data units following any data unit failing to reach the central station may be transmitted thereto even if the the format REJ' has been transferred to the central station, requesting inhibition of transmission of data units. Nonetheless, the data units transmitted to the central station can be combined with the signals re-transmitted from the central station, thereby to achieve a more efficient transfer of a message. More specifically, any data unit which has reached the central station when transmitted for the first time, but failed to reach when re-transmitted, is not discarded even in the GBN re-transmission control, thus enhancing the reliability of the communication system by reducing the times data units are re-transmitted from the terminal station to the central station.

The above description is concerned with the technique of determining the receipt or failure of each data unit in accordance with a error correcting/detecting code. Instead, the receipt or failure can be determined in accordance with other criterion, such as the level of signals received or the contents of data received, though the results are somewhat less correct.

In the embodiments described above, the frame I contains no numbers N(R). Nevertheless, a frame I containing a number N(R) can be transferred as in the HDLC, thus replacing the transfer of the format RR. Further, instead of using two fields for the frame I and ID data, respectively, one bit can be used to identify a frame I, and the other data can be of the same format as that used in the HDLC. Still further, all other functions of the HDLC can be applied to the present invention.

To prevent the communication system from becoming complex, the data re-transmission in data units can be applied to only messages which consists of more data units than a predetermined number. Moreover, each terminal station need not be designed to re-transmit messages in data units. Even if the terminal station cannot re-transmit messages in data units, signals can be transferred between the terminal station and the central station, provided that the terminal station can reads REJ' as REJ. Thus, the communication system according to the invention can comprise not only high-performance terminal stations, but also low-performance terminal stations which may be used by users who need not send long messages.

As has been described, the signal transmission system of the present invention is characterized in that a long message is divided into a plurality of data units in a transmitting station, so that the re-transmitted of the message is controlled in the data units. Thus, it is possible to transmit long messages efficiently through transmission paths even if the paths have low reliability. Further, the system can transmit messages with sufficient efficiency. This is because, so many fields, as is required in the conventional system wherein each message is divided into units smaller than data units and is re-transmitted unit by unit, need not be added to each message so that the message may contain addresses and other data items required for the re-transmission control.

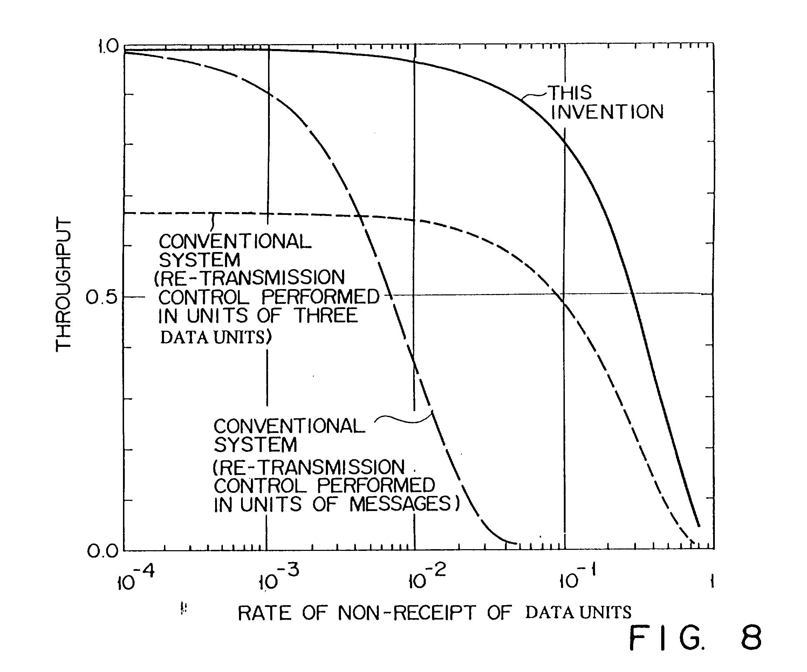

Fig. 8 is a figure representing the throughput provided by the signal transmission system of the invention which performs the SR re-transmission control in data units, the throughput obtained by a conventional systems which performs the SR re-transmission control in units of long messages, and the throughput obtained by a conventional system which performs the SR re-transmission control in units of three data units. The term "throughput" means ratio of the time of using the channel to receive all valid data except overhead such as addresses, to all the time during which the channel is occupied, in the case where every message consists of 100 data units one of which is the overhead such as addresses. As is evident from Fig. 8, the system according to the invention provides a greater throughput than either conventional system, over the entire range of rate of failure of data units.

As is known, the transmission paths of a mobile communication system are insufficiently reliable when a mobile station communicating with the central station is far from the central station. They are fairly reliable when the mobile station happens to be close to the central station. In other words, their reliability vary in accordance with the distance between the central station of the mobile station. In the signal transmission system of the present invention, data having but a little overhead is transmitted with high efficiency when the transmission paths are sufficiently reliable, making it unnecessary to re-transmit data, and performs re-transmission control in smaller units of data, thus minimizing the necessity of re-transmission, when the transmission paths have relatively low reliability.

As has been described, the present invention is characterized in that a long message is divided into a plurality of data units in a transmitting station, so that the re-transmitted of the message is controlled in the units of data units. Thus, long messages can be efficiently transmitted through transmission paths even if the paths have low reliability. Further, messages can be transmitted with high efficiency since so many fields, as is required in the conventional system wherein each message is divided into units smaller than data units and is re-transmitted unit by unit, need not be added to each message so that the message may contain addresses and other data items required for the re-transmission control.

## Claims

1. A signal transmission system for use in a digital communication system wherein a message is transferred between a central station and a terminal station, with one of said central and terminal stations serving as a message sender and the other as a message receiver at a given time, said system comprising:
means (15, 505, 515) in said message sender for providing a message transfer signal (I') which includes: a sequence number (N(S) for controlling retransmission performed in units of one message, a sequence number (n(S)) for controlling retransmission performed in units of one data unit, and an identification code (ID) of a terminal station;
means (15, 505, 515) in said message sender for providing a retransmission request signal (REJ') which includes: a sequence number (N(R)) for controlling retransmission performed in units of one message, a sequence number (n(R)) for controlling retransmission performed in units of one data unit, and said identification code (ID) of a terminal station;
means (15, 505, 515) in said message sender for dividing a message into a plurality of said data units, encoding each of the data units while detecting and correcting errors included therein, if any, and sequentially transmitting the plurality of data units of said message, and
means in said message receiver for receiving (13, 503, 513) the message, decoding (12, 502, 512) each of the plurality of data units thereof while detecting and correcting errors included therein, if any, and determining whether the message has been correctly received;
wherein said message receiver includes control means (13, 503, 513) for first checking the plurality of data units of the message by examining the sequence number (N(S)) for controlling retransmission performed in units of one message, the terminal station identification code (ID), and a result of determining whether said message has been correctly received, and then transmitting to the message sender a retransmission request signal (REJ') such that the retransmission request signal (REJ') includes: a sequence number (N(R)) used for controlling retransmission performed in units of at least one message, and/or a sequence number (n(R)) used for controlling retransmission performed in units of at least one data unit; and
wherein said message sender, to which the retransmission request signal (REJ') is transmitted, includes retransmission means (15, 505, 515) for first checking the retransmission request signal (REJ') and then starting retransmission of either an entire message in accordance with the sequence number (N(R)) used for controlling retransmission performed in units of at least one message, and/or at least one data unit in accordance with the sequence number (n(R)) used for controlling retransmission performed in units of at least one data unit.

2. The signal transmission system according to claim 1, wherein:
said message receiver includes means (13, 503, 513) for providing a data transmission format which includes: a field (I/B) representing a transmission enable/prohibit state of a message sender, and a field (R/N) representing whether or not a data unit transmitted by the message sender can be received by a message receiver, and for providing information regarding said fields (I/B, R/N) at regular intervals; and
wherein said retransmission means (15, 505, 515) of said message sender performs retransmission of either the entire message or the designated data units in accordance with the information regarding said fields (I/B, R/N).

3. A signal transmission system according to claim 1 or 2, wherein:
the control means (13, 503, 513) of said message receiver examines the sequence number (N(S)) used for controlling retransmission performed in units of at least one message, the terminal station identification code (ID), and a result of determining whether said message has been correctly received so that, in the case where the sequence number (N(S)) represents a non-reception state or is not +1 larger than a last-received sequence number (N(S)) , said control means transmits to the message sender said retransmission request signal (REJ) such that the retransmission request signal (REJ) includes a sequence number (N(R)) used for controlling retransmission performed in units of at least one message and, in the case where the sequence number (N(S)) is +1 larger than the last-received sequence number (N(S)) but the received data units include an incorrectly-received data unit, said control means transmits to the message sender a retransmission request signal (REJ') such that the retransmission request signal (REJ') includes: a sequence number (N(R)) used for controlling retransmission performed in units of at least one data unit; and
wherein, if said message sender receives the retransmission signal (REJ) including the sequence number (N(R)), n(R)), the retransmission means of said message sender retransmits at least one data unit included in the message represented by the sequence number (N(R)).

4. The system according to claim 3, wherein said message-receiving station further comprises:
a) signal means for periodically providing to the message-transmitting station a signal indicative of the condition in which each data unit has reached the message-receiving station; and
said message-transmitting station further comprises:
b) means for controlling the retransmitting means (15, 505, 515) to perform the retransmission, in accordance with the condition of each data unit provided by said signal means periodically to the message-receiving station.

## Patentansprüche

1. Signalübertragungssystem für die Anwendung in einem digitalen Kommunikationssystem, wobei eine Mitteilung zwischen einer Zentralstation und einer Endstation übertragen wird und zu einem bestimmten Zeitpunkt eine der Zentral- und Endstationen als ein Mitteilungssender und die andere als ein Mitteilungsempfänger dient, wobei das System umfaßt:
Mittel (15, 505, 515) in dem Mitteilungssender zum Bereitstellen eines Mitteilungsübertragungssignals (I'), welches beinhaltet: eine Reihenfolgenummer (N(S)) zur Steuerung einer in Einheiten von einer Mitteilung durchgeführten Wiederholungsübertragung, eine Reihenfolgenummer (n(S)) zur Steuerung einer in Einheiten von einer Dateneinheit durchgeführten Wiederholungsübertragung, und einen Idenfitikationscode (ID) einer Endstation,
Mittel (15, 505, 515) in dem Mitteilungssender zum Bereitstellen eines Wiederholungsübertragung-Anforderungssignals (REJ'), welches beinhaltet: eine Reihenfolgenummer (N(R)) zur Steuerung der in Einheiten von einer Mitteilung durchgeführten Wiederholungsübertragung, eine Reihenfolgenummer (n(R)) zur Steuerung der in Einheiten von einer Dateneinheit durchgeführten Wiederholungsübertragung und den Identifikationscode (ID) einer Endstation,
Mittel (15, 505, 515) in dem Mitteilungssender zum Aufteilen einer Mitteilung in eine Vielzahl der Dateneinheiten, zum Codieren jeder der Dateneinheiten während darin auftretende Fehler, soweit vorhanden, erfaßt und korrigiert werden, und zum sequentiellen Übertragen der Vielzahl von Dateneinheiten der Mitteilung, und
Mittel in dem Mitteilungsempfänger zum Empfangen (13, 503, 513) der Mitteilung, zum Decodieren (12, 502, 512) jeder der Vielzahl von Dateneinheiten der Mitteilung während gleichzeitig darin auftretende Fehler, soweit vorhanden, erfaßt und korrigiert werden, und zum Ermitteln, ob die Mitteilung fehlerfrei empfangen worden ist,
wobei der Mitteilungsempfänger Steuermittel (13, 503, 513) aufweist, um zunächst die Vielzahl von Dateneinheiten der Mitteilung zu überprüfen, indem die Reihenfolgenummer (N(S)) zur Steuerung der in Einheiten von einer Mitteilung durchgeführten Wiederholungsübertragung, der Identifikationscode (ID) der Endstation und ein Ergebnis der Ermittlung, ob die Mitteilung fehlerfrei empfangen worden ist, überprüft werden, und um anschließend an den Mitteilungssender ein Wiederholungsübertragung-Anforderungssignal (REJ') derart zu übertragen, daß das Wiederholungsübertragung-Anforderungssignal (REJ') umfaßt: eine zur Steuerung der in Einheiten von mindestens einer Mitteilung durchgeführten Wiederholungsübertragung verwendete Reihenfolgenummer (N(R)) und/oder eine für die Steuerung der in Einheiten von mindestens einer Dateneinheit durchgeführten Wiederholungsübertragung verwendete Reihenfolgenummer (n(R)), und
wobei der Mitteilungssender, an den das Wiederholungsübertragung-Anforderungssignal (REJ') übermittelt wird, Wiederholungsübertragungsmittel (15, 505, 515) aufweist, um zunächst das Wiederholungsübertragung-Anforderungssignal (REJ') zu überprüfen und anschließend die Wiederholungsübertragung entweder einer ganzen Mitteilung in Übereinstimmung mit der für die Steuerung der in Einheiten von mindestens einer Mitteilung durchgeführten Wiederholungsübertragung verwendeten Reihenfolgenummer (N(R)) und/oder mindestens einer Dateneinheit in Übereinstimmung mit der für die Steuerung der in Einheiten von mindestens einer Dateneinheit durchgeführten Wiederholungsübertragung verwendeten Reihenfolgenummer (n(R)) zu beginnen.

2. Signalübertragungssystem nach Anspruch 1, wobei:
der Mitteilungsempfänger Mittel (13, 503, 513) umfaßt, um ein Datenübertragungsformat bereitzustellen, welches umfaßt: ein Feld (I/B), welches einen Übertragungs-Freigabe/Sperrzustand eines Mitteilungssenders bezeichnet, und ein Feld (R/N), welches anzeigt, ob eine von dem Mitteilungssender übertragene Dateneinheit von einem Mitteilungsempfänger empfangen werden kann, und um in regelmäßigen Abständen Informationen über diese Felder (I/B, R/N) bereitzustellen, und
wobei die Wiederholungsübertragungsmittel (15, 505, 515) des Mitteilungssenders gemäß den diese Felder (I/B, R/N) betreffenden Informationen eine Wiederholungsübertragung entweder der gesamten Mitteilung oder der bezeichneten Dateneinheiten durchführen.

3. Signalübertragungssystem nach Anspruch 1 oder 2, wobei:
die Steuermittel (13, 503, 513) des Mitteilungsempfängers die für die Steuerung der in Einheiten von mindestens einer Mitteilung durchgeführten Wiederholungsübertragung verwendete Reihenfolgenummer (N(S)), den Identifikationscode (ID) der Endstation und ein Ergebnis der Ermittlung, ob die Mitteilung fehlerfrei empfangen worden ist, überprüfen, so daß, falls die Reihenfolgenummer (N(S)) einen Nichtempfangszustand bezeichnet oder nicht um + 1 größer ist als die zuletzt empfangene Reihenfolgenummer (N(S)), die Steuermittel an dem Mitteilungssender das Wiederholungsübertragung-Anforderungssignal (REJ) derart übertragen, daß das Wiederholungsübertragung-Anforderungssignal (REJ) eine für die Steuerung der in Einheiten von mindestens einer Mitteilung durchgeführten Wiederholungsübertragung verwendete Reihenfolgenummer (N(R)) umfaßt, und daß, falls die Reihenfolgenummer (N(S)) um + 1 größer als die zuletzt empfangene Reihenfolgenummer (N(S)) ist und die empfangenen Dateneinheiten jedoch eine fehlerhaft empfangene Dateneinheit umfassen, die Steuermittel an den Mitteilungssender ein Wiederholungsübertragung-Anforderungssignal (REJ') derart übertragen, daß das Wiederholungsübertragung-Anforderungssignal (REJ') eine für die Steuerung der in Einheiten von mindestens einer Dateneinheit durchgeführten Wiederholungsübertragung verwendete Reihenfolgenummer (N(R)) umfaßt, und
wobei die Wiederholungsübertragungsmittel des Mitteilungssenders wiederholt mindestens eine in der Mitteilung enthaltene Dateneinheit übertragen, die durch die Reihenfolgenummer (N(R)) bezeichnet wird, falls der Mitteilungssender das die Reihenfolgenummer (N(R), n(R)) enthaltende Wiederholungsübertragung-Anforderungssignal (REJ) empfängt.

4. Signalübertragungssystem nach Anspruch 3, wobei die Mitteilungsempfangsstation weiterhin umfaßt:
a) Signalmittel, um periodisch der Mitteilungssendestation ein Signal zur Verfügung zu stellen, welches den Zustand bezeichnet, in dem jede Dateneinheit die Mitteilungsempfangsstation erreicht hat, und
wobei die Mitteilungssendestation weiterhin umfaßt:
b) Mittel zur Steuerung der Wiederholungsübertragungsmittel (15, 505, 515), um die Wiederholungsübertragung in Übereinstimmung mit dem durch die Signalmittel der Mitteilungsempfangsstation periodisch zur Verfügung gestellten Zustand jeder Dateneinheit durchzuführen.

## Revendications

1. Système de transmission de signaux à utiliser dans une installation de communication numérique dans laquelle un message est transmis entre un poste central et un poste périphérique, l'un desdits postes central et périphérique servant à un instant donné d'émetteur du message et l'autre de récepteur du message, ledit système comprenant :
- un moyen (15, 505, 515) dans ledit émetteur de message pour fournir un signal (I') de transfert de message qui contient un nombre de séquence (N(S)) servant à commander une retransmission effectuée en unités de un message, un nombre de séquence (n(S)) servant à commander une retransmission effectuée en unités de une unité de données et un code d'identification (ID) d'un poste périphérique,
- un moyen (15, 505, 515) dans ledit émetteur de message pour fournir un signal (REJ') de demande de retransmission qui contient un nombre de séquence (N(R)) servant à commander une retransmission effectuée en unités de un message, un nombre de séquence (n(R)) servant à commander une retransmission effectuée en unités de une unité de données et ledit code d'identification (ID) d'un poste périphérique,
- un moyen (15, 505, 515) dans ledit émetteur de message pour diviser un message en une pluralité d'unités de données, coder chacune des unités de données tout en détectant et corrigeant s'il y en a des erreurs qu'elles contiennent, et transmettre séquentiellement la pluralité d'unités de données dudit message, et
- un moyen dans ledit récepteur de message pour recevoir (13, 503, 513) le message, décoder (12, 502, 512) chacune des unités de données de celui-ci tout en détectant et corrigeant s'il y en a des erreurs qu'elles contiennent, et déterminer si le message a été correctement reçu,
dans lequel ledit récepteur de message contient un moyen de commande (13, 503, 513) pour vérifier d'abord la pluralité d'unités de données du message en examinant le nombre de séquence (N(S)) servant à commander une retransmission effectuée en unités de un message, le code d'identification (ID) du poste périphérique et le résultat de la détermination du fait que ledit message a été ou non correctement reçu, et pour transmettre ensuite à l'émetteur de message un signal de demande de retransmission (REJ') de telle sorte que le signal de demande de retransmission (REJ') contienne un nombre de séquence (N(R)) utilisé pour commander une retransmission effectuée en unités d'au moins un message, et/ou un nombre de séquence (n(R)) utilisé pour commander une retransmission effectuée en unités d'au moins une unité de données, et
dans lequel ledit émetteur de message auquel est transmis le signal de demande de retransmission (REJ') contient un moyen de retransmission (15, 505, 515) pour vérifier d'abord le signal de demande de retransmission (REJ') et commencer ensuite une retransmission, soit du message tout entier en accord avec le nombre de séquence (N(R)) utilisé pour commander une retransmission effectuée en unités d'au moins un message, et/ou soit au moins une unité de données en accord avec le nombre de séquence (n(R)) utilisé pour commander une retransmission effectuée en unités d'au moins une unité de données.

2. Système de transmission de signaux selon la revendication 1, dans lequel ledit récepteur de message contient un moyen (13, 503, 513) pour fournir un format de transmission de données qui contient un champ (I/B) représentant un état d'autorisation/interdiction de transmission de l'émetteur de message et un champ (R/N) représentant le fait qu'une unité de données transmise par l'émetteur de message peut ou non être reçue par le récepteur de message, et pour fournir une information concernant lesdits champs (I/B, R/N) à intervalles réguliers, et dans lequel ledit moyen de retransmission (15, 505, 515) dudit émetteur de message effectue une retransmission, soit du message entier, soit des unités de données désignées en accord avec l'information concernant lesdits champs (I/B, R/N).

3. Système de transmission de signaux selon la revendication 1 ou 2, dans lequel le moyen de commande (13, 503, 513) dudit récepteur de message examine le nombre de séquence (N(S)) utilisé pour commander une retransmission effectuée en unités d'au moins un message, le code d'identification (ID) du poste périphérique et le résultat de la détermination du fait que ledit message a été ou non correctement reçu de sorte que, dans le cas où le nombre de séquence (N(S)) représente un état de non réception ou ne dépasse pas de plus de 1 unité le nombre de séquence (N(S)) reçu en dernier, ledit moyen de commande transmet audit émetteur de message un signal (REJ) de demande de retransmission de telle sorte que le signal de demande de retransmission (REJ) contienne un nombre de séquence (N(R)) utilisé pour commander une retransmission effectuée en unités d'au moins un message et, dans le cas où le nombre de séquence (N(S)) dépasse de plus de 1 unité le nombre de séquence (N(S)) reçu en dernier mais où les unités de données reçues contiennent une unité de donnée reçue de manière incorrecte, ledit moyen de commande transmet audit émetteur de message un signal (REJ') de demande de retransmission de telle sorte que le signal de demande de retransmission (REJ') contienne un nombre de séquence (n(R)) utilisé pour commander une retransmission effectuée en unités d'au moins une unité de données, et dans lequel, si ledit émetteur de message reçoit le signal (REJ) de demande de retransmission contenant le nombre de séquence (N(R), n(R)), le moyen de retransmission dudit émetteur de message retransmet au moins une unité de données contenue dans le message représenté par le nombre de séquence (N(R)).

4. Système de transmission de signaux selon la revendication 3, dans lequel ledit poste de réception de message comprend en outre :
a) un moyen de signalisation pour fournir périodiquement au poste émetteur de message un signal indiquant la condition dans laquelle chaque unité de donnée a atteint le poste récepteur de message, et
ledit poste émetteur de message comprend en outre :
b) un moyen pour commander au moyen de retransmission (15, 505, 515) d'effectuer la retransmission en fonction de la condition de chaque unité de données fournie périodiquement au poste récepteur de message par ledit moyen de signalisation.
